# DEMANDE DE BREVET EUROPEEN

(11) **EP 0 960 870 A1**
(43) Date de publication de la demande: **01.12.1999**
(21) Numéro de dépôt: 99450009.8
(22) Date de dépôt: 11.05.1999
(51) Int. Cl.: C04B 35/80, C03C 14/00, C04B 35/565, C04B 35/624

(54) **Procédé d'élaboration d'un matériau d'interphase, matériau obtenu, procédé de traitement d'une fibre céramique de renfort avec ce matériau et procédé de fabrication d'un matériau thermostructural associé**

(30) Priorité: 15.05.1998 FR 9806419
(71) Demandeur: AEROSPATIALE SOCIETE NATIONALE INDUSTRIELLE, Société Anonyme, 75781 Paris Cedex 16 (FR)
(72) Inventeur: Dariol, Ludovic, 33160 Saint Medard en Jalles (FR); Larnac, Guy, 33160 Saint Aubin du Medoc (FR); Phalippou, Jean, 34980 Montferrie R/Lez (FR)
(74) Mandataire: Thébault, Jean-Louis

(57) **Abrégé**

- L'objet de l'invention est un procédé d'élaboration d'un matériau d'interphase à partir d'oxydes présentant des porosités, prévu pour être disposé entre un matériau de renfort céramique, notamment des fibres, et une matrice verre, céramique ou vitrocéramique, caractérisé en ce qu'il consiste à :
- choisir une composition sensiblement identique à celle de la matrice et/ou du matériau de renfort, en sorte de limiter la diffusion et de disposer de coefficients de dilatation sensiblement identiques mais ayant une température de fusion supérieure à celle de la matrice,
- ajouter à ladite composition un auxiliaire générateur de porosité,
   - dépose de ladite composition sur le matériau de renfort.

L'invention couvre aussi le matériau obtenu, le procédé de traitement d'une fibre céramique de renfort avec ce matériau d'interphase et le procédé fabrication d'un matériau thermostructural associé.

## Description

La présente invention concerne les matériaux composites de type à matrice céramique, vitrocéramique ou verre et renfort céramique du type fibres céramiques, une interface ayant au moins une couche poreuse étant interposée entre ce renfort et cette matrice dans laquelle il est noyé.

La présente invention a plus particulièrement pour objet le procédé de fabrication d'un matériau d'interphase adapté, le matériau d'interphase obtenu ainsi que l'utilisation de ce matériau d'interphase pour la fabrication d'un matériau thermostructural travaillant au moins dans la plage de 500°C à 1200°C, voire 500°C à 2000°C.

On utilise pour la suite de la description le terme "céramique" par souci de simplification mais les éléments de la description et des revendications sont applicables directement aux matrices en verre ou en vitrocéramique.

On sait que les céramiques sont dites fragiles car elles se déforment de manière élastique jusqu'à la rupture quasi-simultanée de la matrice et du renfort, sans passer par une phase plastique or les matériaux à base céramique sont les seuls utilisables dans certaines configurations ou applications, spatiales, échangeurs de chaleur, turbines, fours, notamment au-dessus de 800°C jusqu'à 1200°C. Cette fragilité est un inconvénient particulièrement sensible.

On sait que la présence d'une interphase entre la matrice et le renfort, en l'occurrence les fibres, permet de dévier la fissure en propagation dans la matrice pour éviter qu'elle n'atteigne les fibres et conduise à une rupture prématurée de la pièce réalisée en ce matériau.

Le matériau d'interphase doit permettre l'endommagement du composite au-delà de son domaine élastique tout en assurant le transfert de charges avant le début de la fissuration. Il faut que l'ensemble des éléments du composite, fibres et matrice, assure la reprise des efforts et que les fibres ne se trouvent pas désolidarisées de la matrice dans le domaine élastique.

On connaît de l'art antérieur différents types d'interphases qu'il convient de situer pour bien montrer le positionnement de l'interphase selon la présente invention.

On connaît les interphases lamellaires qui reposent sur une grande anisotropie du matériau tel que le graphite, dont la structure cristalline est lamellaire. Il existe des liaisons fortes σ dans le plan des feuillets et des liaisons plus faibles π entre les feuillets.

Ainsi les plans peuvent glisser les uns par rapport aux autres. En interposant un tel matériau entre la matrice et les fibres, il est possible de dévier la fissure qui suit le chemin de plus faible énergie de décohésion, c'est à dire le chemin entre les feuillets. Le front d'entaille n'arrive donc pas jusqu'à la fibre et se trouve absorbé dans le matériau d'interphase.

On peut citer parmi ces interphases, une interphase réalisée en pyrocarbone PyC ou en nitrure de bore BN décrites respectivement dans les brevets US-A- 4 605 588 et FR-A- 2 567 874.

Ces couches sont turbostratiques car elles sont déposées en phase vapeur, ce qui les rend moins anisotropes que le matériau naturel mais néanmoins l'effet de déviation est bien obtenu.

Le problème important du carbone est sa vulnérabilité au-dessus de 550°C en atmosphère oxydante, ce qui le rend inutilisable pour les applications envisagées dans la présente invention.

Le nitrure de bore, dans sa phase hexagonale, présente une structure lamellaire sensiblement comparable à celle du graphite mais malgré une meilleure résistance que le carbone, il est néanmoins oxydé au-dessus de 800°C, sous air pour former B₂O₃ qui est relativement volatil. Le nitrure de bore BN est élaboré par dépôt en phase vapeur, ce qui est cher et donc un obstacle à l'industrialisation pour des matériaux à plus faible valeur ajoutée.

De fait, il a été développé une autre interphase constituée d'oxydes lamellaires, à structure en feuillets de type mica ou fluoro-mica. Les brevets EP-A- 366 234 et FR-A-2 699 523 décrivent des interphases phlogopite et fluoro-phlogopite de ce type.

Cette structure lamellaire de ces micas disparaît également au-dessus de 750°C, ce qui rend ces matériaux inutilisables dans les plages recherchées de températures, sauf à réaliser des structures atomiques plus élaborées qui permettent de gagner 100 à 150°C, ce qui est insuffisant pour des matériaux céramiques.

On peut aussi recourir à des interphases métalliques car certains métaux très ductiles permettent d'absorber par leurs déformations l'énergie déployée en front de fissure. Le problème est que les métaux compatibles sont des métaux nobles comme l'or Au, le platine Pt ou l'iridium Ir ou encore le rhodium Rh et le ruthénium Ru, ce qui rend de telles réalisations incompatibles avec des productions industrielles, notamment par le prix prohibitif de ces métaux.

De plus dans le cas des métaux, il se pose fréquemment des problèmes de diffusion de certains atomes dans les fibres et/ou la matrice. Si l'on a recours à des matériaux moins nobles, il se produit une formation de cristaux qui modifient complètement la composition au point de faire chuter certaines caractéristiques mécaniques de façon importante.

Une autre solution pour résister à la progression des fissures consiste à prévoir une interphase microfissurée, les microfissures représentant des voies préférentielles de propagation d'une fissure macroscopique et ces microfissures assurent la déviation de la fissure de façon tout à fait efficace. Le brevet FR-A- 2 673 940 décrit une telle réalisation qui conduit à l'obtention d'un matériau ayant les propriétés recherchées d'endommagement.

Un mode de réalisation décrit dans le brevet FR-A 2 654 750, consiste à déposer un oxyde du type ZrO₂ ou HfO₂ et à faire évoluer sa structure cristalline. Ainsi la transformation de phase s'accompagne d'un changement important de volume, ce qui génère des microfissures.

Le problème, dans ce cas, est la stabilité de ces fissures au sein du matériau car :
- soit lors d'un frittage à température supérieure pour l'élaboration de la matrice, les fissures peuvent se refermer,
- soit le matériau peut perdre toute tenue mécanique par fissuration généralisée.

On connaît enfin par le brevet FR-A- 2 673 938 une interphase constituée d'un matériau poreux , plus particulièrement d'un matériau poreux dont la densité est forte aux interfaces, lnterphase/Matrice d'une part et Interphase/Fibre d'autre part et dont la densité est faible à coeur. Le but est toujours de faciliter le cheminement de la fissure au coeur du matériau d'interphase. La fissure progresse de pore en pore dans le matériau d'interphase et n'atteint pas la fibre.

Les variations de densité ont pour but essentiel de maintenir la porosité à coeur sans que ces pores soient remplis par le matériau de la matrice au cours de son élaboration.

On peut utiliser des oxydes comme matériaux poreux à l'interphase, si bien que le dépôt interfacial présente une forte résistance à l'oxydation, ce qui est recherché comme indiqué dans le préambule.

Les modes de réalisation décrits dans l'art antérieur concernent des microcomposites avec des fibres en Carbure de Silicium, SiC notamment commercialisées sous la marque "Textron". Ces fibres ont des gros diamètres (de 140 µm) et les interphases ont des dimensions sans commune mesure avec les besoins et les moyens de l'industrie, ce qui les rend incompatibles avec les exigences de l'industrie; notamment les fibres utilisées qui ont des diamètres de 15 µm et se présentent en torons de plusieurs centaines de fibres et incompatibles avec les objectifs de la présente invention.

Un procédé pour arriver à réaliser de telles couches en matériau poreux consiste par exemple à déposer sur les fibres une couche fugitive de carbone ou de molybdène que l'on élimine ensuite. Lors de l'élimination par oxydation des matériaux déposés, il se forme une forte porosité entre la matrice et la fibre après cette élimination du matériau fugitif. Des essais donnent satisfaction avec un composite Al₂O₃ saphir/YAG ou encore avec du Si₃N₄ dans un système SiC/Si₃N₄.

Dans ce cas, la fibre est trempée dans une barbotine de poudre de Si₃N₄, de silice et de particules de polystyrène. La silice colloïdale joue le rôle de liant des grains de Si₃N₄. Des microsphères de polystyrène agissent comme générateur de porosité.

L'interphase poreuse est obtenue par calcination lente à 600°C du polystyrène puis par un traitement rapide de frittage à 1350°C sous N₂. Une couche de silice dense est nécessaire pour éviter le remplissage des pores pendant l'élaboration de la matrice. L'interphase est épaisse, qqs µm car elle est réalisée à partir d'une barbotine qui est très visqueuse du fait des composants qui sont tous mélangés et du fait notamment des microsphères de polystyrène dont on ne peut diminuer le diamètre suffisamment.

On constate à nouveau que de tels essais sont réservés à des applications en laboratoire mais ne sont aucunement transposables à l'industrie avec ses contraintes de moyens matériels et de prix, même pour des produits de très haute technologie à applications limitées.

Il existe aussi un matériau développé par le présent déposant qui propose une interphase non adhérente réalisée à partir de nitrure d'aluminium, AIN, matériau qui a fait l'objet d'une description détaillée dans la demande de brevet EP N°634 378.

Afin de pouvoir répondre à des propriétés différentes et sachant qu'il est difficile de réunir au sein d'un même matériau toutes les propriétés recherchées, une théorie, dite d'interphases multiples, permet de réaliser différentes couches ayant chacune au moins une des propriétés à réunir pour obtenir, par combinaison, le résultat final recherché.

On comprend aussi qu'une telle interphase multiple est d'une grande difficulté technique à réaliser et requiert à ce jour, au moins un double dépôt en phase vapeur dont on sait que le coût unitaire est déjà prohibitif. Une telle solution a peu de chances d'être retenue comme mode d'exploitation industrielle. Les essais menés avec une interphase BN/SiC ont conduit à des coûts de réalisation incompatibles avec les objectifs de la présente invention.

La présente invention vise une interphase poreuse dans une matrice céramique avec un renfort céramique, notamment des fibres céramiques, ladite interphase possédant les propriétés de déviation des fissures tout en résistant à un environnement oxydant et tout en permettant la reprise des efforts auxquels est soumise la pièce réalisée en ce matériau. La présente invention vise aussi le procédé de fabrication de cette interphase ainsi que le procédé de fabrication de fibres revêtues de cette interphase et le procédé de fabrication d'un matériau thermostructural incluant de telles fibres.

L'interphase selon l'invention doit permettre d'obtenir les effets de déviation des fissures progressantes et l'amélioration du comportement thermomécanique, ceci pour des matériaux susceptibles de travailler dans des plages de températures comprises entre 500°C et 1200°C, voire entre 1200° et 2000°C.

L'interphase selon l'invention prend en compte la nature des fibres et de la matrice utilisées. De plus, l'interphase comprend un auxiliaire générateur de porosité qui permet le contrôle des paramètres de cette porosité à différents stades. Cet auxiliaire permet le contrôle de la valeur de contrainte de cisaillement interfaciale qui détermine la capacité de glissement entre les fibres et la matrice.

De plus, la présente invention propose un procédé de fabrication qui utilise la voie liquide qui, non seulement garantit la précision et l'homogénéité de la composition recherchée, mais permet aussi l'introduction, dans la composition d'interphase, de l'auxiliaire générateur de porosité.

A cet effet, le procédé d'élaboration d'un matériau d'interphase à partir d'oxydes présentant des porosités, prévu pour être disposé entre un matériau de renfort céramique, notamment des fibres, et une matrice verre, céramique ou vitrocéramique, se caractérise en ce qu'il consiste à :
- choisir une composition sensiblement identique à celle de la matrice et/ou du matériau de renfort, en sorte de limiter la diffusion et de disposer de coefficients de dilatation sensiblement identiques mais ayant une température de fusion supérieure à celle de la matrice,
- ajouter à ladite composition un auxiliaire générateur de porosité,
- dépose de ladite composition sur le matériau de renfort.

Lorsque la matrice est élaborée avec une étape de pressage à chaud, la composition d'interphase est choisie pour avoir une viscosité supérieure à celle du matériau de la matrice, à la température d'élaboration de ce matériau de la matrice.

Dans un mode de réalisation préférentiel, l'auxiliaire générateur de porosité comprend des particules de carbone et dans ce cas, on procède à une oxydation au moins partielle des particules de noir de carbone pour générer un taux de porosité donné dans ladite composition.

Selon une autre caractéristique du procédé, la composition du matériau de la matrice et/ou du matériau de renfort est susceptible d'être oxydante à la température d'élaboration, ensuite les particules de noir de carbone sont oxydées seulement partiellement après dépôt sur le matériau de renfort pour obtenir une première porosité et le complément d'oxydation totale est obtenu lors de l'élaboration de la matrice intégrant ledit matériau de renfort pour générer une seconde porosité.

L'invention couvre aussi le matériau d'interphase obtenu qui présente les paramètres suivants :
- concentration constante en oxydes modificateurs par rapport à la composition de la matrice, et
- concentration constante en oxydes formateurs.

Selon un mode de réalisation particulier on peut donner la composition suivante :
- 1 MgO - 1,9 Al₂O₃ - 3,1 SiO₂ pour une matrice de composition 0,5 MgO - 0,5 Li₂O - 1 Al₂O₃ - 4 SiO₂.

Dans ce cas, il comprend 20 % en volume de noir de carbone.

Selon un autre mode de réalisation particulier, on peut donner la composition suivante :
- 3Al₂O₃ - 2 SiO₂ pour une matrice en Carbure de Silicium, SiC.

Dans ce cas, il comprend 40 % en volume de noir de carbone.

Il est aussi prévu dans la présente invention de protéger le procédé de traitement d'une fibre de renfort qui comprend la succession des étapes suivantes :
- réaliser deux dépôts sol-gel, le premier, colloïdal, contenant l'auxiliaire générateur de porosité et le second, polymérique, ayant la même composition mais exempt de générateur de porosité, les deux dépôts ayant la même composition de base, celle retenue pour le matériau d'interphase,
- faire tremper dans le premier sol-gel la fibre par "dip-coating",
- faire subir à ladite composition au moins une oxydation partielle à l'air en température pour générer une porosité en plus de la porosité naturelle due au sol colloïdal,
- faire tremper ladite fibre avec la première couche une couche poreuse dans le second sol-gel également par "dip-coating, et
- traiter thermique cette seconde couche pour réaliser une couche dense cristallisée à effet barrière de même composition que la première couche.

Un premier mode de procédé de traitement d'une fibre de renfort avec une interphase consiste à faire tremper la fibre dans un sol-gel colloïdal ou polymérique de matériau d'interface de la composition retenue puis à faire subir à cette fibre revêtue une oxydation totale pour générer en une fois la porosité nécessaire.

Il est aussi possible de réaliser, à partir de ces fibres un matériau thermostructural incluant ces fibres, procédé qui comprend les étapes suivantes :
- frittage de poudre de la composition retenue pour l'élaboration de la matrice par pressage à chaud,
- génération simultanée d'une porosité complémentaire par les particules de noir de carbone non oxydées, par oxydation de ces particules de carbone par l'oxygène libéré par les composés d'élaboration de la matrice et/ou par les constituants des fibres.

La présente interphase est décrite en relation avec deux modes particuliers de réalisation, donnés à titre d'exemples non limitatifs, relatifs à :
- un premier matériau dit SiC/MAS-L, décrit dans la demande de brevet EP-A-514 611, les fibres sont ainsi en Carbure de Silicium et la matrice est du type MgO-Li₂O-Al₂O₃-SiO₂ et,
- un second matériau dit SiC/SiC, les fibres et la matrice étant en Carbure de Silicium.

Le SiC/MAS-L a été retenu car son élaboration et ses composants sont tels qu'il convient parfaitement à des applications industrielles tant du point de vue des moyens nécessaires pour la fabrication que des prix de revient de ces produits tout en répondant au cahier des charges indiqué dans le préambule, notamment la plage de températures de fonctionnement.

Les figures des dessins annexés correspondent respectivement à :
- figure 1, un diagramme comparatif du comportement mécanique en température ambiante en flexion 4 points d'un composite SiC/MAS-L,
- figure 2, un diagramme de l'évolution des contraintes à rupture en fonction de la température, et
- figures 3A et 3B, deux vues photographiques d'un microcomposite SiC/SiC, avec décohésion Fibre/Matrice.

La composition de l'interphase selon la présente invention doit répondre à plusieurs critères si l'on souhaite obtenir l'effet de déviation recherché et éviter la rupture de la fibre. Il faut aussi prendre en compte le procédé d'élaboration retenu.

Dans le cas d'une réalisation d'une matrice par pressage à chaud, ce qui est le procédé généralement retenu pour des procédés industriels, il faut que le matériau d'interphase résiste aux conditions de pression et de température sans pour autant perdre sa porosité et sans voir sa composition modifiée.

Il faut donc que la viscosité de la composition d'interphase soit toujours nettement supérieure à celle de la matrice pour lui éviter de subir une densification.

De même la température de décomposition, de ramollissement ou de fusion du matériau d'interphase doit être également supérieure à la température d'élaboration de la matrice pour éviter une fusion prématurée du matériau d'interphase, ce qui conduirait à une densification non recherchée.

Ensuite, pour éviter les problèmes de diffusion de certains ions particulièrement mobiles de l'interphase vers la matrice, la solution retenue par la présente invention consiste à choisir une composition chimique de l'interphase qui se rapproche de celle de la matrice et de la fibre.

Le matériau ainsi que cela a été expliqué ci-avant est un oxyde afin de résister à des températures de la gamme 500°C à 2000°C, tant en atmosphère contrôlée qu'en milieu oxydant notamment à l'air.

De même, le coefficient de dilatation thermique du matériau d'interphase doit rester proche de celui des fibres et de la matrice pour ne pas induire de contraintes internes supplémentaires lors de la descente en température.

Pour l'élaboration du matériau d'interphase, on a recours à un procédé par voie liquide du type sol-gel qui est un procédé parfaitement en adéquation avec les techniques industrielles, notamment du point de vue du coût.

Il existe deux sortes de sols le premier dit colloïdal et le second dit polymérique.

Le premier sol se transforme en gel lorsque le pH varie ou lors de l'évaporation de la solution. La taille des particules est de l'ordre de 30 nm pour les particules d'alumine et 20 nm pour les particules de silice par exemple, ce qui est relativement important.

Aussi le gel obtenu permet de générer une porosité plus importante du fait de cette taille de particules et par le fait qu'il n'y a pas inter-pénétration de ces particules.

Le second sol forme un gel par condensation des entités réactives, ce qui, en plus du fait de la petite taille quelques nm et de l'inter-pénétration des entités, génère une couche dense.

Ainsi avec la même composition, il est possible de réaliser par des techniques sol-gel différentes, deux couches dont l'une est poreuse naturellement, avec possibilité d'augmenter la porosité comme cela va être expliqué ultérieurement, et l'autre est dense naturellement.

En ce qui concerne l'auxiliaire générateur de porosité selon l'invention, il s'agit de particules de noir de carbone introduites dans la composition du sol précurseur du matériau d'interphase avant le revêtement des fibres.

Le noir de carbone présente de nombreux avantages et c'est pour cette raison qu'il a été retenu. En effet, le noir de carbone est très peu cher, il est aisément disponible, ceci dans de nombreuses granulométries bien contrôlées dans une large gamme de tailles, y compris les très petites, de quelques dizaines de nanomètres, et la composition est parfaitement connue.

On note que le procédé sol-gel permet l'introduction de ces particules de noir de carbone dans un système complexe, notamment dans un système quaternaire comme celui du MAS-L, tout en conservant la composition homogène avec une proportion contrôlée des particules de noir de carbone. Cette technique par voie liquide confirme la possibilité d'une adaptation aux conditions d'une fabrication industrielle à faible coût.

Le dépôt de ce matériau d'interphase sur les fibres est réalisé de préférence par la méthode du "dip-coating" qui consiste à immerger le substrat à revêtir dans un bain contenant le sol et à le ressortir de ce bain à une vitesse déterminée pour permettre une déposition et un drainage du sol sur le substrat qui conduisent à une épaisseur donnée de revêtement sous forme de gel.

Dans le cas de la fibre selon l'invention, la méthode de "dip-coating" est mise en oeuvre en continu.

Les fibres ainsi obtenues peuvent ensuite permettre la réalisation de pièces aux géométries variées comme des plaques, des tubes, des panneaux raidis.

### Exemple 1 :

Les fibres de SiC utilisées sont commercialisées sous la référence Nicalon NLM 202 de la firme NIPPON CARBIDE.

La composition MAS-L de la matrice est :
- 0,5 MgO - 0,5 Li₂O - 1 Al₂O₃ - 4 SiO₂

Une des compositions préférentielles du matériau d'interphase est :
- 1 MgO - 1,9 Al₂O₃ - 3,1 SiO₂

On note que le matériau est de composition sensiblement identique.

Il a été remarqué que le matériau d'interphase est bien adapté notamment lorsque la règle suivante est appliquée.

Il faut garder constante par rapport à la matrice :
- la concentration en oxydes modificateurs qui comprennent des ions alcalins et alcalino-terreux, et
- la concentration en oxydes formateur comme Al₂O₃ et SiO₂.

Cette composition correspond en théorie à la stoechiométrie exacte des phases cristallines : β Spodumène, α Cordiérite et Mullite, ce qui permet de minimiser les proportions de la phase vitreuse.

De fait, la formation de Mullite à la place de l'excès de silice augmente les caractéristiques mécaniques du matériau d'interphase.

De même le rapport des viscosités est très important puisque, à température d'élaboration, logη lnterphase - logη de MAS-L = 6,5 , ce qui permet un densification partielle des poudres élaborées selon la composition principale, la poudre de l'interface ne subit quasiment pas de densification lors du frittage.

Le procédé de fabrication du matériau d'interface consiste à traiter la fibre directement avec la composition selon l'invention pour générer à même la fibre le matériau d'interphase recherché.

Les fibres SiC Nicalon (14 µm en torons de 500 monofilaments) sont préalablement désensimées thermiquement car pour des raisons de commodité de manipulation, ces torons commercialisés avec un ensimage polymère.

La fibre est ensuite revêtue en continu d'une interphase selon l'invention puis imprégnée de poudre MAS-L.

Le dépôt de revêtement est effectué préférentiellement en deux passes :
1/ - "dip-coating" de la fibre avec une première couche, de l'ordre de 0,3 µm d'épaisseur pour situer les valeurs, dans un bain contenant un sol avec :
   - des particules colloïdales qui conduisent à un dépôt naturellement poreux, comme cela a été expliqué ci-avant, et
   - des particules de noir de carbone, dans des proportions de l'ordre de 20 % en volume.
   - oxydation partielle des particules de noir de carbone par traitement thermique sous air à 600°C de la fibre revêtue de cette première couche de matériau d'interphase.
2/ - "dip-coating" de la fibre revêtue de sa première couche avec une seconde couche mince de 0,05 µm, dans un bain contenant un sol de particules polymériques qui conduit à un oxyde dense. Cette couche est exempte de particules de noir de carbone,
   - traitement thermique de cristallisation de cette seconde couche pour conserver l'intégrité de l'interphase.

On note que ce procédé est particulièrement attractif car il permet de générer deux porosités successives.

La première porosité est en effet délicate à contrôler lors de la fabrication de la matrice, ce qui oblige souvent à augmenter le taux initial de porosité au-delà de ce qui est nécessaire en final, pour tenir compte de la perte de porosité éventuelle lors de l'élaboration de la matrice.

La seconde porosité est élaborée in situ, dans le matériau, lors de l'élaboration de la matrice, si bien que cette porosité ne peut que subsister a posteriori. Cette seconde oxydation est initiée par l'oxygène libéré par les composés de la matrice et/ou des fibres.

Du point de vue de la fonctionnalité, la première couche, épaisse, est bien prévue pour dévier les fissures à l'approche des fibres et la seconde couche,mince, représente une barrière étanche afin d'éviter la densification de la première couche par la phase liquide formée durant l'élaboration ultérieure de la matrice.

On a ensuite réalisé le matériau thermostructural correspondant avec une matrice MAS-L, selon l'enseignement de la demande de brevet EP-A-538 108 et dans la demande de brevet FR-A-2 655 327, en utilisant les fibres munies d'un matériau interphase tel qu'il vient d'être décrit.

Le procédé retenu est le frittage de poudre sous charge dans une presse à chaud.

C'est lors de la fabrication de ce matériau composite que les particules de noir de carbone qui n'ont pas été oxydées dans la phase d'oxydation à 600°C à l'air se trouvent oxydées par l'apport en oxygène des fibres et de la matrice, comme indiqué ci-avant.

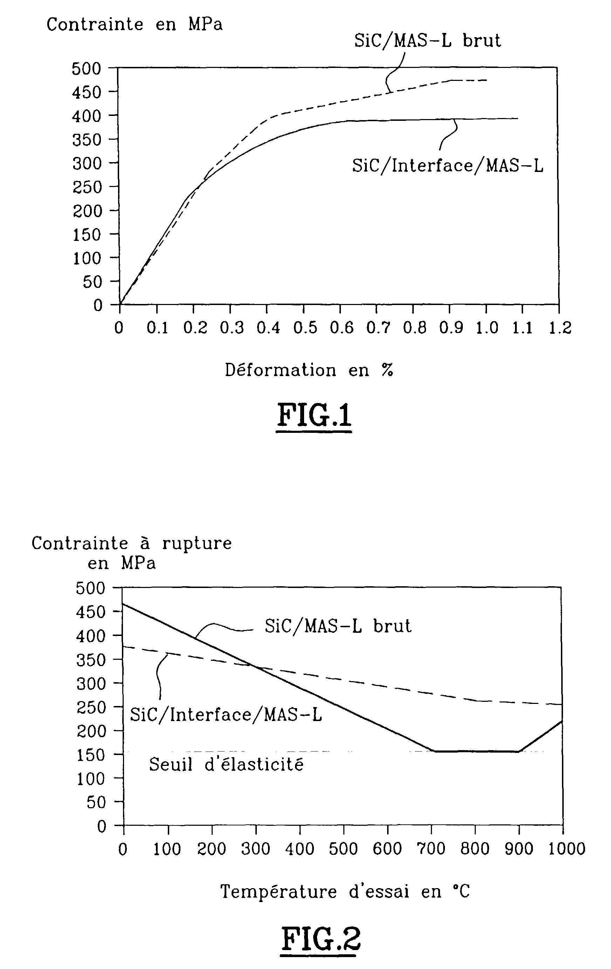

Sur la figure 1, on a représenté le comportement mécanique comparé, en flexion 4 points, à température ambiante, d'un matériau SiC/MAS-L brut d'élaboration avec le matériau avec interphase SiC/lnterphase/MAS-L selon l'invention.

On note que les performances de déformation des deux matériaux sont sensiblement identiques, ce qui est normal puisqu'il s'agit des mêmes éléments de départ.

Par contre sur le diagramme de la figure 2 qui représente l'évolution des contraintes de rupture sous air, on note une différence certaine car le matériau avec interphase selon l'invention se déforme au-delà de son seuil d'élasticité, au moins jusqu'à 1000°C, ce qui n'est pas le cas du compositie SiC/MAS-L.

### Exemple 2 :

Dans cet exemple, le matériau thermostructural recherché est le SiC/SiC comprenant des fibres SiC High Nicalon qui est un toron de 500 fibres de 14 µm mais à très faible teneur en oxygène, et une matrice en Carbure de Silicium qui, dans ce cas est élaborée par infiltration chimique en phase vapeur.

Les problèmes de remplissage de la porosité sont moins critiques que dans le cas du pressage à chaud, si bien que la seconde couche dense à effet barrière est moins utile et peut être supprimée. La couche poreuse est sensiblement de même épaisseur que celle del'exemple 1.

La composition est de préférence celle de la Mullite stoechiométrique, 3Al₂O₃- 2SiO₂ avec un pourcentage de 40 % en volume de particules de noir de carbone. Il faut en effet générer plus de porosité initialement, la composition de la matrice et des fibres ne libérant pas d'oxygène pour générer une seconde porosité.

Aussi, le procédé consiste en une oxydation totale des particules à l'air à 650°C des particules de noir de carbone contenu dans le matériau d'interphase puisque la matrice et les fibres ne sont pas des sources d'oxydation pendant l'élaboration de la matrice.

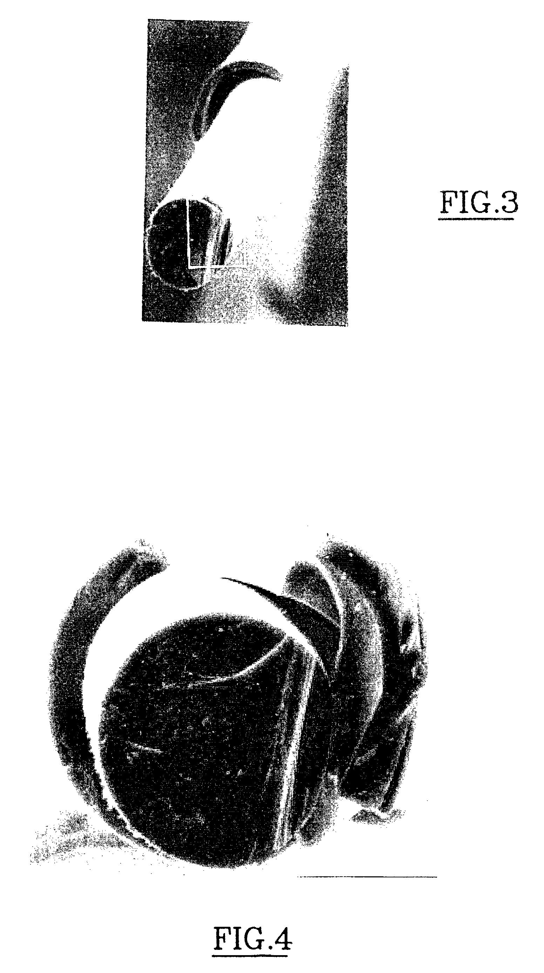

On peut noter sur les représentations photographiques des figures 3 et 4, la décohésion Fibre/Matrice qui est le témoin du rôle et de l'efficacité de l'interphase selon l'invention.

Les deux exemples donnés permettent de réaliser des matériaux insensibles à l'oxydation dans des plages de température comprises entre 500°C et 1600°C, Néanmoins, il suffirait d'adapter le matériau de la matrice et les fibres pour atteindre de stempératures plus élevées de l'ordre de 2000°C, par exemple avec de la zircone ZrO₂.

## Revendications

1. Procédé d'élaboration d'un matériau d'interphase à partir d'oxydes présentant des porosités, prévu pour être disposé entre un matériau de renfort céramique, notamment des fibres, et une matrice verre, céramique ou vitrocéramique, caractérisé en ce qu'il consiste à :
- choisir une composition sensiblement identique à celle de la matrice et/ou du matériau de renfort, en sorte de limiter la diffusion et de disposer de coefficients de dilatation sensiblement identiques mais ayant une température de fusion supérieure à celle de la matrice,
- ajouter à ladite composition un auxiliaire générateur de porosité,
- dépose de ladite composition sur le matériau de renfort.

2. Procédé d'élaboration d'un matériau d'interphase selon la revendication 1, caractérisé en ce que, de plus, lorsque la matrice est élaborée avec une étape de pressage à chaud, la composition d'interphase est choisie pour avoir une viscosité supérieure à celle du matériau de la matrice, à la température d'élaboration de ce matériau de la matrice.

3. Procédé d'élaboration d'un matériau d'interphase selon la revendication 1 ou 2, caractérisé en ce que l'auxiliaire générateur de porosité comprend des particules de carbone et en ce que l'on procède à une oxydation au moins partielle des particules de noir de carbone pour générer un taux de porosité donné dans ladite composition.

4. Procédé selon la revendication 3, caractérisé en ce que la composition du matériau de la matrice et/ou du matériau de renfort est susceptible d'être oxydante à la température d'élaboration, en ce que les particules de noir de carbone sont oxydées seulement partiellement après dépôt sur le matériau de renfort pour obtenir une première porosité et en ce que le complément d'oxydation totale est obtenu lors de l'élaboration de la matrice intégrant ledit matériau de renfort pour générer une seconde porosité.

5. Matériau d'interphase obtenu par la mise en oeuvre du procédé selon la revendication 1, 2, 3 ou 4 , caractérisé en ce qu'il présente les paramètres suivants :
- concentration constante en oxydes modificateurs par rapport à la composition de la matrice, et
- concentration constante en oxydes formateurs.

6. Matériau d'interphase selon la revendication 5, caractérisé en ce qu'il a la composition suivante :
- 1 MgO - 1,9 Al₂O₃ - 3,1 SiO₂ pour une matrice de composition 0,5 MgO - 0,5 Li₂O - 1 Al₂O₃ - 4 SiO₂.

7. Matériau d'interphase selon la revendication 6, caractérisé en ce qu'il comprend 20 % en volume de noir de carbone.

8. Matériau d'interphase selon la revendication 5, caractérisé en ce qu'il a la composition suivante :
- 3Al₂O₃ - 2 SiO₂ pour une matrice en Carbure de Silicium, SiC.

9. Matériau d'interphase selon la revendication 8, caractérisé en ce qu'il comprend 40 % en volume de noir de carbone.

10. Procédé de traitement d'une fibre de renfort avec une interphase selon l'une quelconque des revendications 1 à 7, caractérisé en ce qu'il consiste en la succession des étapes suivantes :
- réaliser deux dépôts sol-gel, le premier, colloïdal, contenant l'auxiliaire générateur de porosité et le second, polymérique, ayant la même composition mais exempt de générateur de porosité, les deux dépôts ayant la même composition de base, celle retenue pour le matériau d'interphase,
- faire tremper dans le premier sol-gel la fibre par "dip-coating",
- faire subir à ladite composition au moins une oxydation partielle à l'air en température pour générer une porosité en plus de la porosité naturelle due au sol colloïdal,
- faire tremper ladite fibre avec la première couche une couche poreuse dans le second sol-gel également par "dip-coating, et
- traiter thermique cette seconde couche pour réaliser une couche dense cristallisée à effet barrière de même composition que la première couche.

11. Procédé de traitement d'une fibre de renfort avec une interphase selon l'une quelconque des revendications 1 à 5 ou 7 ou 8, caractérisé en ce qu'il consiste à faire tremper la fibre dans un sol-gel colloïdal ou polymérique de matériau d'interface de la composition retenue puis à faire subir à cette fibre revêtue une oxydation totale pour générer en une fois la porosité nécessaire.

12. Procédé de fabrication d'un matériau thermostructural incluant des fibres ayant subi un traitement selon la revendication 10, comprenant une matrice et des fibres ayant un matériau d'interphase selon la revendication 5, 6 ou 7, caractérisé en ce qu'il comprend les étapes suivantes :
- frittage de poudre de la composition retenue pour l'élaboration de la matrice par pressage à chaud,
- génération simultanée d'une porosité complémentaire par les particules de noir de carbone non oxydées, par oxydation de ces particules de carbone au moyen de l'oxygène libéré par les composés d'élaboration de la matrice et/ou par les constituants des fibres.
